# EUROPEAN PATENT SPECIFICATION

(11) **EP 4 184 177 B1**
(45) Date of publication and mention of the grant of the patent: **26.03.2025**
(21) Application number: 21208942.9
(22) Date of filing: 18.11.2021
(51) Int. Cl.: G01N 35/10

(54) **METHOD FOR FLUID VOLUME TRACKING IN A LABORATORY SYSTEM OR DEVICE**
VERFAHREN ZUR FLUIDVOLUMENVERFOLGUNG IN EINEM LABORSYSTEM ODER -GERÄT
PROCÉDÉ DE SUIVI DE VOLUME DE FLUIDE DANS UN SYSTÈME OU UN DISPOSITIF DE LABORATOIRE

(43) Date of publication of application: 24.05.2023
(73) Proprietor: F. Hoffmann-La Roche AG, 4070 Basel (CH); Roche Diagnostics GmbH, 68305 Mannheim (DE)
(72) Inventor: GUT, Raphael, 6343 Rotkreuz (CH); ETTEL, Christian, 6343 Rotkreuz (CH); SPESCHA, Roger, 6343 Rotkreuz (CH)
(74) Representative: Merkel, Patrick

(56) References cited:
- US-A1- 2011 223 682
- US-A1- 2013 280 129
- US-A1- 2019 391 170
- US-A1- 2020 003 768

## Description

### Field of the Invention

The invention relates to a method for fluid volume tracking in a laboratory system or device, to a laboratory system or device with increased fluid tracking capabilities, to a computer program product for controlling a laboratory system or device and to a computer-readable storage medium for said computer program product.

### Background

In modern laboratory systems or devices, the so called "walk-away" time, meaning the time the system or device can run without any assistance needed by an operator, e.g. for filling consumables, reagents, buffer, emptying waste containers, etc., is an important factor. For this reason, modern laboratory system or devices are provided with internal fluid containers for providing the necessary amount of fluids necessary for operation. It is therefore necessary to provide a fluid volume tracking of the amount of fluid present in the container in order to ensure that the desired walk-away time.

The present invention solves this problem with a method and a system or device of the independent claims.

Dependent claims refer to preferred embodiments of the present invention.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

According to the present invention, the laboratory system or device comprises at least one fluid buffer container, the fluid buffer container is a container which is normally an integral part of the device and is filled with a fluid, which can be any fluid necessary for operating the laboratory device or system, in particular a diluent fluid or a washing fluid. The fluid is supplied to the fluid buffer container from at least one fluid supply container, which is of course fluidically connected to the fluid buffer container. The fluid supply container is generally a removable fluid container, which can be exchanged/removed from the laboratory system or device upon depletion.

The fluid supply container comprises a data storage for storing at least data related to the content of the fluid supply container. In a preferred embodiment, the data storage is in form of a RFID tag, which can be read by a RFID tag reader of the system or device. This has the advantage, that the content of the fluid supply container is stored on the container itself. Therefore, the system or device can retrieve the content of the fluid supply container even if the container has been removed from the system or device, e.g. when the container is stored in another location during non-operation of the system or device.

The system or device further comprises a scale for determining the content of the fluid buffer container and a control unit connected to the scale. The scale allows for a simply gravimetric determination of the content of the fluid buffer container due to the relationship of density of the fluid and measured weight of the fluid. Of course, the control unit may be provided with additional sensors. According to the invention, the control unit comprises a temperature sensor, in order to compensate for temperature related changes in density of the fluid.

The control unit connected to the scale may be a dedicated control unit designed for this purpose or may be integrated in a control unit of the system or device, e.g. a computer.

The method of the present invention comprises the step of determining by the control unit the content of the fluid buffer container by means of the scale and the temperature sensor.

The control unit then determines if the content of the fluid buffer container is below a given threshold. The given threshold may be a fixed value but is preferably a value determined based on an expected consumption of the fluid. The system or device may first determine the amount of the fluid necessary for operation for a given time or amount of runs/batches to be processed by the system or device and then determine if the content of the fluid buffer container is sufficient for operation of the system or device for the desired time or amount of runs/batches.

Then, if the control unit determines that the content of the fluid buffer is below the given threshold, the control unit determines the filling amount of fluid (as a volume and/or weight) to be supplied to the fluid buffer container from the fluid supply container in order to reach the desired fluid content of the fluid buffer container.

Then, the data related to the content of the fluid supply container in the data storage of the fluid supply container is updated by subtracting the filling amount previously determined from the content of the fluid supply container stored in the data storage of the fluid supply container.

Finally, the filling amount of fluid previously determined is supplied from the fluid container to the fluid buffer container.

With the method according to the present invention it is therefore possible to track the fluid volume in a fluid buffer container of a system or device and guarantee the desired walk-away time.

In a preferred embodiment of the method of the present invention, the control unit further determines, after the filling amount of fluid previously determined has been supplied from the fluid container to the fluid buffer container, the content of the fluid buffer container. This is done by comparing the actual measured fluid content of the buffer container with the initially determined content of the fluid buffer container plus the filling amount.

In the case where there is a difference or the difference exceeds a given tolerance range, the data related to the content of the fluid supply container in the data storage of the fluid supply container is updated according to the delivered filling amount.

In order to increase the robustness of the system or device, a pump is preferably provided for supplying the fluid from the fluid supply container to the fluid buffer container. The pump is preferably controlled by the control unit and is preferably a volumetric pump allowing to monitor the amount of the fluid transported from the fluid supply container to the fluid buffer container.

The present invention also relates to a laboratory system or device as described above, the above description applying accordingy to the system or device.

The invention further relates to a computer program product comprising instructions which, when the program is executed by a computer, cause the computer to cause the laboratory system or device described above to execute the steps of the method according to the present invention as well as to a computer-readable storage medium having stored thereon said computer program product, the above description applying accordingly to the computer program product and the computer readable storage medium.

### Short description of the figures

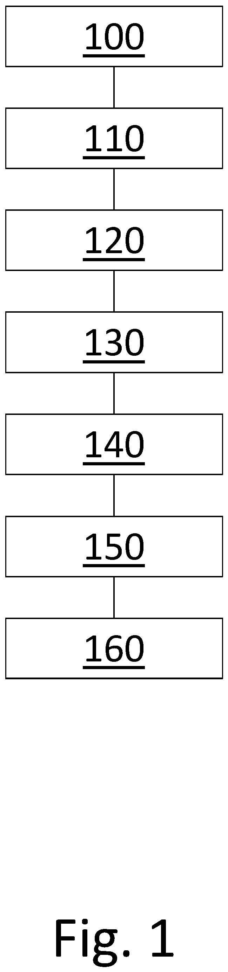

**Fig. 1** depicts a flow diagram of a method according to the present invention.

### Detailed description of the figures

The invention will be described now by way of a preferred embodiment in connection with the drawing.

The method is performed on a laboratory system or device as described above comprising at least one fluid buffer container, at least one fluid supply container fluidically connected to the fluid buffer container, the fluid supply container comprising a data storage for storing at least data related to the content of the fluid supply container, a scale for determining the content of the fluid buffer container and a control unit connected to the scale.

In a first step 100, the control unit determines by means of the scale the content of the fluid buffer container (V₀).

In a second step 110, the control unit then determines if the content of the fluid buffer container (V₀) is below a given threshold. If the content of the fluid buffer container (V₀) is above the given threshold, the method is stopped and the system or device is operated without any further steps until the method is triggered again, e.g. when new orders for performing further activities by the system or device are received.

If the content of the fluid buffer container (V₀) is below the given threshold, the control unit determines the filling amount of fluid (FA) to be supplied to the fluid buffer container from the fluid supply container.

In a further step 120, the data related to the content of the fluid supply container (VS₀) in the data storage of the fluid supply container, is updated by subtracting the filling amount (FA) from the content of the fluid supply container (VS₀), therefore setting the content of the fluid supply container to VS₀ - FA.

Then, in step 130, the filling amount (FA) of fluid is supplied from the fluid supply container to the fluid buffer container.

After step 130, the control unit then determines again in step 140 by means of the scale the content of the fluid buffer container (V₁) and then, in step 150, if the content of the fluid buffer container (V₁) corresponds to the expected content of the fluid buffer container (V₀ + FA).

In the case where in step 150 it is determined that the content of the fluid buffer container (V₁) does not correspond to the expected content (V₀ + FA), the data related to the content of the fluid supply container in the data storage of the fluid supply container is updated accordingly by subtracting the actually delivered filling amount (V₁ - V₀) from the content of the fluid supply container VS₀ in a further step 160.

## Claims

1. A method for fluid volume tracking in a laboratory system or device, the system or device comprising:
- at least one fluid buffer container,
- at least one fluid supply container fluidically connected to the fluid buffer container, the fluid supply container comprising a data storage for storing at least data related to the content of the fluid supply container,
- a scale for determining the content of the fluid buffer container,
- a control unit comprising a temperature sensor, wherein the control unit is connected to the scale,
the method comprising the following steps:
a. determining by the control unit the content of the fluid buffer container by means of the scale and the temperature sensor,
b. determining by the control unit if the content of the fluid buffer container is below a given threshold,
c. determining by the control unit the filling amount of fluid to be supplied to the fluid buffer container from the fluid supply container,
d. updating the data related to the content of the fluid supply container in the data storage of the fluid supply container by subtracting the filling amount previously determined from the content of the fluid supply container stored in the data storage of the fluid supply container,
e. supply the filling amount of fluid from the fluid supply container to the fluid buffer container.

2. The method according to claim 1, further comprising the step of:
f. determining, after step e) by means of the scale the content of the fluid buffer container,
g. determining if the content of the fluid buffer container corresponds to the expected content.

3. The method according to claim 2, further comprising the steps of:
h. in the case where in step g) it is determined that the content of the fluid buffer container does not correspond to the expected content, updating the data related to the content of the fluid supply container in the data storage of the fluid supply container.

4. The method according to one of the previous claims, wherein the data storage is an RFID tag.

5. The method according to one of the previous claims, wherein the system or device further comprises a pump for supplying the fluid from the fluid supply container to the fluid buffer container, the pump being connected to the control unit.

6. A laboratory system or device, the system or device comprising:
- at least one fluid buffer container,
- at least one fluid supply container fluidically connected to the fluid buffer container, the fluid supply container comprising a data storage for storing at least data related to the content of the fluid supply container,
- a scale for determining the content of the fluid buffer container,
- a control unit comprising a temperature sensor, wherein the control unit is connected to the scale,
wherein the control unit is configured to control the system or device to:
a. determine the content of the fluid buffer container by means of the scale and the temperature sensor,
b. determine if the content of the fluid buffer container below a given threshold,
c. determine the filling amount of fluid to be supplied to the fluid buffer container from the fluid supply container,
d. update the data related to the content of the fluid supply container in the data storage of the fluid supply container by subtracting the filling amount previously determined from the content of the fluid supply container stored in the data storage of the fluid supply container,
e. supply the filling amount of fluid from the fluid supply container to the fluid buffer container.

7. The system or device according to claim 6, wherein the control unit further configured to:
f. determine, after step e) by means of the scale the content of the fluid buffer container,
g. determine if the content of the fluid buffer container corresponds to the expected content.

8. The system or device according to claim 7, wherein the control unit it further configured to:
h. in the case where in step g) it is determined that the content of the fluid buffer container does not correspond to the expected content, updating the data related to the content of the fluid supply container in the data storage of the fluid supply container.

9. The system or device according to one of the previous claims 6 to 8, the system or device further comprising a RFID tag reader connected to the control unit.

10. The device according to one of the previous claims 6 to 9, wherein the system or device further comprises a pump for supplying the fluid from the fluid supply container to the fluid buffer container, the pump being connected to the control unit.

11. A computer program product comprising instructions which, when the program is executed by a computer, cause the computer to cause the system or device according to any one of claims 6 to 10 to execute the steps of the method according to any one of claims 1 to 5.

12. A computer-readable storage medium having stored thereon the computer program product of claim 11.

## Patentansprüche

1. Verfahren zur Fluidvolumenverfolgung in einem Laborsystem oder -gerät, wobei das System oder Gerät Folgendes umfasst:
- mindestens einen Fluidpufferbehälter,
- mindestens einen Fluidzufuhrbehälter, der mit dem Fluidpufferbehälter fluidverbunden ist, wobei der Fluidzufuhrbehälter einen Datenspeicher zum Speichern mindestens von Daten bezüglich des Inhalts des Fluidzufuhrbehälters umfasst,
- eine Waage zum Bestimmen des Inhalts des Fluidpufferbehälters,
- eine Steuerungseinheit, die einen Temperatursensor umfasst, wobei die Steuerungseinheit mit der Waage verbunden ist,
wobei das Verfahren die folgenden Schritte umfasst:
a. Bestimmen des Inhalts des Fluidpufferbehälters mithilfe der Steuerungseinheit mittels der Waage und des Temperatursensors,
b. Bestimmen, ob der Inhalt des Fluidpufferbehälters unter einer vorgegebenen Schwelle liegt, mithilfe der Steuerungseinheit,
c. Bestimmen der Füllmenge an Fluid, die dem Fluidpufferbehälter aus dem Fluidzufuhrbehälter zuzuführen ist, mithilfe der Steuerungseinheit,
d. Aktualisieren der Daten bezüglich des Inhalts des Fluidzufuhrbehälters in dem Datenspeicher des Fluidzufuhrbehälters durch Subtrahieren der Füllmenge, die zuvor aus dem Inhalt des Fluidzufuhrbehälters, der in dem Datenspeicher des Fluidzufuhrbehälters gespeichert ist, bestimmt wurde,
e. Zuführen der Füllmenge an Fluid zu dem Fluidpufferbehälter aus dem Fluidzufuhrbehälter.

2. Verfahren nach Anspruch 1, ferner umfassend den folgenden Schritt:
f. Bestimmen des Inhalts des Fluidpufferbehälters mittels der Waage nach Schritt e),
g. Bestimmen, ob der Inhalt des Fluidpufferbehälters dem erwarteten Inhalt entspricht.

3. Verfahren nach Anspruch 2, ferner umfassend die folgenden Schritte:
h. im Falle, dass in Schritt g) bestimmt wird, dass der Inhalt des Fluidpufferbehälters nicht dem erwarteten Inhalt entspricht, Aktualisieren der Daten bezüglich des Inhalts des Fluidzufuhrbehälters in dem Datenspeicher des Fluidzufuhrbehälters.

4. Verfahren nach einem der vorstehenden Ansprüche, wobei der Datenspeicher ein RFID-Tag ist.

5. Verfahren nach einem der vorstehenden Ansprüche, wobei das System oder Gerät ferner eine Pumpe zum Zuführen des Fluids zu dem Fluidpufferbehälter aus dem Fluidzufuhrbehälter umfasst, wobei die Pumpe mit der Steuerungseinheit verbunden ist.

6. Laborsystem oder -gerät, wobei das System oder Gerät Folgendes umfasst:
- mindestens einen Fluidpufferbehälter,
- mindestens einen Fluidzufuhrbehälter, der mit dem Fluidpufferbehälter fluidverbunden ist, wobei der Fluidzufuhrbehälter einen Datenspeicher zum Speichern mindestens von Daten bezüglich des Inhalts des Fluidzufuhrbehälters umfasst,
- eine Waage zum Bestimmen des Inhalts des Fluidpufferbehälters,
- eine Steuerungseinheit, die einen Temperatursensor umfasst, wobei die Steuerungseinheit mit der Waage verbunden ist,
wobei die Steuerungseinheit zum Steuern des Systems oder Geräts zu Folgendem ausgebildet ist:
a. Bestimmen des Inhalts des Fluidpufferbehälters mittels der Waage und des Temperatursensors,
b. Bestimmen, ob der Inhalt des Fluidpufferbehälters unter einer vorgegebenen Schwelle liegt,
c. Bestimmen der Füllmenge an Fluid, die dem Fluidpufferbehälter aus dem Fluidzufuhrbehälter zuzuführen ist,
d. Aktualisieren der Daten bezüglich des Inhalts des Fluidzufuhrbehälters in dem Datenspeicher des Fluidzufuhrbehälters durch Subtrahieren der Füllmenge, die zuvor aus dem Inhalt des Fluidzufuhrbehälters, der in dem Datenspeicher des Fluidzufuhrbehälters gespeichert ist, bestimmt wurde,
e. Zuführen der Füllmenge an Fluid zu dem Fluidpufferbehälter aus dem Fluidzufuhrbehälter.

7. System oder Gerät nach Anspruch 6, wobei die Steuerungseinheit ferner zu Folgendem ausgebildet ist:
f. Bestimmen des Inhalts des Fluidpufferbehälters mittels der Waage nach Schritt e),
g. Bestimmen, ob der Inhalt des Fluidpufferbehälters dem erwarteten Inhalt entspricht.

8. System oder Gerät nach Anspruch 7, wobei die Steuerungseinheit ferner zu Folgendem ausgebildet ist:
h. im Falle, dass in Schritt g) bestimmt wird, dass der Inhalt des Fluidpufferbehälters nicht dem erwarteten Inhalt entspricht, Aktualisieren der Daten bezüglich des Inhalts des Fluidzufuhrbehälters in dem Datenspeicher des Fluidzufuhrbehälters.

9. System oder Gerät nach einem der vorstehenden Ansprüche 6 bis 8, wobei das System oder Gerät ferner ein RFID-Tag-Lesegerät umfasst, das mit der Steuerungseinheit verbunden ist.

10. Gerät nach einem der vorstehenden Ansprüche 6 bis 9, wobei das System oder Gerät ferner eine Pumpe zum Zuführen des Fluids zu dem Fluidpufferbehälter aus dem Fluidzufuhrbehälter umfasst, wobei die Pumpe mit der Steuerungseinheit verbunden ist.

11. Computerprogrammprodukt, das Anweisungen umfasst, die, wenn das Programm von einem Computer ausgeführt wird, den Computer veranlassen, das System oder Gerät nach einem der Ansprüche 6 bis 10 zu veranlassen, die Schritte des Verfahrens nach einem der Ansprüche 1 bis 5 auszuführen.

12. Computerlesbares Speichermedium, auf dem das Computerprogrammprodukt nach Anspruch 11 gespeichert ist.

## Revendications

1. Procédé de suivi de volume de fluide dans un système ou dispositif de laboratoire, le système ou dispositif comprenant :
- au moins un récipient de tampon de fluide,
- au moins un récipient d'alimentation en fluide connecté fluidiquement au récipient de tampon de fluide, le récipient d'alimentation en fluide comprenant un stockage de données pour stocker au moins des données associées au contenu du récipient d'alimentation en fluide,
- une échelle pour déterminer le contenu du récipient de tampon de fluide,
- une unité de commande comprenant un capteur de température, dans lequel l'unité de commande est connectée à l'échelle,
le procédé comprenant les étapes suivantes :
a. détermination par l'unité de commande du contenu du récipient de tampon de fluide au moyen de l'échelle et du capteur de température,
b. détermination par l'unité de commande si le contenu du récipient de tampon de fluide est inférieur à un seuil donné,
c. détermination par l'unité de commande de la quantité de remplissage de fluide à alimenter jusqu'au récipient de tampon de fluide en provenance du récipient d'alimentation en fluide,
d. mise à jour des données associées au contenu du récipient d'alimentation en fluide dans le stockage de données du récipient d'alimentation en fluide en soustrayant la quantité de remplissage déterminée précédemment du contenu du récipient d'alimentation en fluide stocké dans le stockage de données du récipient d'alimentation en fluide,
e. alimentation de la quantité de remplissage de fluide en provenance du récipient d'alimentation en fluide jusqu'au récipient de tampon de fluide.

2. Procédé selon la revendication 1, comprenant en outre l'étape de :
f. détermination, après l'étape e) au moyen de l'échelle du contenu du récipient de tampon de fluide,
g. détermination si le contenu du récipient de tampon de fluide correspond au contenu attendu.

3. Procédé selon la revendication 2, comprenant en outre les étapes de :
h. dans le cas où à l'étape g) il est déterminé que le contenu du récipient de tampon de fluide ne correspond pas au contenu attendu, mise à jour des données associées au contenu du récipient d'alimentation en fluide dans le stockage de données du récipient d'alimentation en fluide.

4. Procédé selon l'une des revendications précédentes, dans lequel le stockage de données est une étiquette RFID.

5. Procédé selon l'une des revendications précédentes, dans lequel le système ou dispositif comprend en outre une pompe pour alimenter le fluide en provenance du récipient d'alimentation en fluide jusqu'au récipient de tampon de fluide, la pompe étant connectée à l'unité de commande.

6. Système ou dispositif de laboratoire, le système ou dispositif comprenant :
- au moins un récipient de tampon de fluide,
- au moins un récipient d'alimentation en fluide connecté fluidiquement au récipient de tampon de fluide, le récipient d'alimentation en fluide comprenant un stockage de données pour stocker au moins des données associées au contenu du récipient d'alimentation en fluide,
- une échelle pour déterminer le contenu du récipient de tampon de fluide,
- une unité de commande comprenant un capteur de température, dans lequel l'unité de commande est connectée à l'échelle,
dans lequel l'unité de commande est configurée pour commander le système ou dispositif pour :
a. déterminer le contenu du récipient de tampon de fluide au moyen de l'échelle et du capteur de température,
b. déterminer si le contenu du récipient de tampon de fluide est inférieur à un seuil donné,
c. déterminer la quantité de remplissage de fluide à alimenter jusqu'au récipient de tampon de fluide en provenance du récipient d'alimentation en fluide,
d. mettre à jour les données associées au contenu du récipient d'alimentation en fluide dans le stockage de données du récipient d'alimentation en fluide en soustrayant la quantité de remplissage déterminée précédemment du contenu du récipient d'alimentation en fluide stocké dans le stockage de données du récipient d'alimentation en fluide,
e. alimenter la quantité de remplissage de fluide en provenance du récipient d'alimentation en fluide jusqu'au récipient de tampon de fluide.

7. Système ou dispositif selon la revendication 6, dans lequel l'unité de commande est en outre configurée pour :
f. déterminer, après l'étape e) au moyen de l'échelle le contenu du récipient de tampon de fluide,
g. déterminer si le contenu du récipient de tampon de fluide correspond au contenu attendu.

8. Système ou dispositif selon la revendication 7, dans lequel l'unité de commande est en outre configurée pour :
h. dans le cas où à l'étape g) il est déterminé que le contenu du récipient de tampon de fluide ne correspond pas au contenu attendu, mettre à jour des données associées au contenu du récipient d'alimentation en fluide dans le stockage de données du récipient d'alimentation en fluide.

9. Système ou dispositif selon l'une des revendications 6 à 8 précédentes, le système ou dispositif comprenant en outre un lecteur d'étiquette RFID connecté à l'unité de commande.

10. Dispositif selon l'une des revendications 6 à 9 précédentes, dans lequel le système ou dispositif comprend en outre une pompe pour alimenter le fluide en provenance du récipient d'alimentation en fluide jusqu'au récipient de tampon de fluide, la pompe étant connectée à l'unité de commande.

11. Produit de programme informatique comprenant des instructions qui, lorsque le programme est exécuté par un ordinateur, amènent l'ordinateur à amener le système ou dispositif selon l'une quelconque des revendications 6 à 10 à exécuter les étapes du procédé selon l'une quelconque des revendications 1 à 5.

12. Support de stockage lisible par ordinateur sur lequel est stocké le produit de programme informatique selon la revendication 11.
